# EUROPÄISCHE PATENTSCHRIFT

(11) **EP 0 628 330 B1**
(45) Veröffentlichungstag und Bekanntmachung des Hinweises auf die Patenterteilung: **02.12.1998**
(21) Anmeldenummer: 94107986.5
(22) Anmeldetag: 24.05.1994
(51) Int. Cl.: B01D 1/00, B01D 3/08

(54) **Rotationsverdampfer**
Rotary evaporator
Evaporateur rotatif

(30) Priorität: 11.06.1993 DE 4319498
(43) Veröffentlichungstag der Anmeldung: 14.12.1994
(73) Patentinhaber: LAUTENSCHLÄGER, Werner, D-88200 Leutkirch (DE)
(72) Erfinder: LAUTENSCHLÄGER, Werner, D-88200 Leutkirch (DE)
(74) Vertreter: Schmidt-Evers, Jürgen, Dipl.-Ing.

(56) Entgegenhaltungen:
- WO-A-92/09351
- DE-A- 2 600 298
- PATENT ABSTRACTS OF JAPAN vol. 9, no. 283 (C-313) (2006) 9. November 1985 & JP-A-60 129 101 (NIPPON SHINKU GIJUTSU) 10. Juli 1985

## Beschreibung

Die Erfindung bezieht sich auf einen Rotationsverdampfer nach dem Oberbegriff des Anspruchs 1 wie er in der Schrift WO-A-92 09 351 offenbart ist.

Rotationsverdampfer sind seit langem bekannt, und sie werden seit etwa dreißig Jahren mit Erfolg benutzt. Die klassische Rotationsverdampfung beruht auf der Übertragung von Wärme von einer aufgeheizten Flüssigkeit, z.B. Wasser oder bei höheren Temperaturen Öl, auf den Verdampfungsstoff, der sich in einem Glas-Rundkolben befindet. Der Glas-Rundkolben wird in schräger Anordnung während der Verdampfung durch einen Drehantrieb gedreht. Dadurch wird eine Oberflächen-Vergrößerung aufgrund der Benetzung an der Rundkolben-Innenoberfläche hervorgerufen, die den Verdampfungsprozeß im Vergleich mit stillstehenden Verdampfungsbehältern wesentlich beschleunigt. Um den Verdampfungsstoff, bei dem es sich auch um ein Gemisch aus einem Probenmaterial und einem Reagent handeln kann, in das Flüssigkeitsbad zu tauchen, ist es bei bekannten Ausgestaltungen üblich, den Halter für den Rundkolben oder das Flüssigkeitsbad vertikal verstellbar und in der jeweiligen Verstellhöhe feststellbar anzuordnen. Dabei ist der Halter in schräger Position in einem Ständer drehbar gelagert, neben dem eine elektrische Heizplatte angeordnet ist, auf der das in einem Topf angeordnete Flüssigkeitsbad steht.

Ein solcher Rotationsverdampfer ist aus mehreren Gründen nachteilig. Zum einen ist das Erhitzen des Verdampfungsstoffes zeitraubend und aufwendig, weil zunächst das Flüssigkeitsbad zeitraubend und mit verhältnismäßig geringem Wirkungsgrad erhitzt werden muß und dann die Wärme vom Flüssigkeitsbad auf den Verdampfungsstoff zu übertragen ist.

Es ist auch mit einem großen Wärmeverlust zu rechnen, weil der Topf und das Flüssigkeitsbad verhältnismäßig viel Wärme durch Wärmeleitung und Abstrahlung an die Umgebung abgeben.

Ein Glas-Rundkolben weist eine kleine Öffnung auf. Hierdurch ist ein rationelles Füllen oder Entleeren des Glas-Kolbens, wie z.B. die Entnahme von Proben, beeinträchtigt.

Insbesondere bei großen Rundkolben für große einzudampfende Stoff- bzw. Probenmengen ist die Gefahr einer Implosion mit der zugehörigen Gefährdung von Personen und Gegenständen gegeben. Zusätzliche Sicherheitsforderungen machen deshalb das Arbeiten mit großen Verdampfungsmengen sehr schwierig.

Es ist auch nicht möglich, den Verdampfungsprozeß visuell zu beobachten, z.B. den Verdampfungsendzeitpunkt visuell festzustellen, da der Rundkolben sich im Flüssigkeitsbad befindet. Für eine visuelle Beobachtung müßte der Rundkolben aus dein Flüssigkeitsbad transportiert werden, wozu zwar Verstelleinrichtungen benutzt werden können, die den Rotationsverdampfer jedoch wesentlich verklompizieren und verteuern.

Der Erfindung liegt die Aufgabe zugrunde, einen Rotationsverdampfer gemäß dem Oberbegriff von Anspruch 1 so auszugestalten, daß eine rationellere Verdampfung möglich ist.

Diese Aufgabe wird durch die Merkmale des Anspruchs 1 gelöst.

Beim erfindungsgemäßen Rotationsverdampfer erfolgt die Erhitzung des Verdampfungsstoffes durch Mikrowellen in der Bestrahlungskammer eines Mikrowellen-Heizgerätes, wobei sich nur der Halter und das Gefäß in der Heizkammer befinden. Der Drehantrieb ist außerhalb der Heizkammer angeordnet. Die Abführung des Dampfes wird mit einem Transportgas, bei dem es sich z.B. um Umgebungsluft oder auch um ein Inertgas handeln kann, unterstützt. Ein solches Transportgas kann sowohl separat als auch durch eine gegebenenfalls vorhandene Zuführungsleitung für den Verdampfungsstoff eingeführt werden, wobei eine kleine Menge Transportgas permanent gespeist werden kann (Einstellung über Gasfluß, Meß- und Regelung). Vorzugsweise erstreckt der Halter sich schrag nach unten durch die Wandung der Heizkammer in diese hinein erstreckt. Wenigstens eine Zuführungs- und auch Abführungsleitung für beispielsweise eine kontinuierliche Zuführung des Verdampfungsstoffes oder ggfls. auch eines Probenstoffes und eines Reganzmittels und Abführung von Dampf können sich vorzugsweise längs durch den Halter erstrecken. Hierdurch bleibt nicht nur die Rotation des Halters bzw. des Gefäßes unbeeinträchtigt, sodern es bedarf auch keiner weiteren Durchführungsöffnungen im die Heizkammer umgebenden Gehäuse. Aufgrund der Anordnung des Drehantriebs außerhalb der Heizkammer ist dieser von Beeinträchtigungen durch die Mikrowellen geschützt angeordnet.

Beim erfindungsgemäßen Rotationsverdampfer kann aufgrund eine Kapselung im die Heizkammer umgebenden Gehäuse eine hervorragende Wärmeausnutzung erreicht werden, wenn, Wärmeverluste an die Umgebung durch zusätzliche Isolierung des Gehäuses auf ein Minimum reduziert werden. Dies ist nicht nur hinsichtlich eines möglichst geringen Wärmeverlustes von Bedeutung, sondern auch hinsichtlich einer möglichst geringen Aufheizung der Umgebung bzw. des Arbeitsraumes.

Die durch die Erfindung erzielbare rationelle Aufheizung des Verdampfungstoffes läßt sich sowohl durch direkte als auch indirekte Aufheizung des Verdampfungsstoffes erreichen. Bei der Benutzung eines mikrowellenabsorbierenden Verdampfungsstoffes, bei dem es sich in den meisten Fällen handeln dürfte, findet eine direkte Aufheizung des Verdampfungsstoffes durch die Mikrowellen statt. Dabei wird der Verdampfungsstoff sowohl im Bereich der Flüssigkeitsansammlung als auch im Bereich der Benetzung der Innenwandung des Gefäßes erhitzt. Die rationelle Verdampfung wird somit nicht nur durch die Benetzung der Innenwandung aufgrund der Rotation sondern zusätzlich auch durch die Bestrahlung des Verdampfungsstoffes und der Benetzungsanteile erreicht.

Je nach Art des Verdampfungsstoffes kann die Erhitzung ggfls. zusätzlich auch durch eine indirekte Aufheizung erfolgen, nämlich dadurch, daß das Gefäß wenigstens teilweise insbesondere in seinem Aufnahmebereich aus einem mikrowellenabsorbierenden Material besteht oder mit einem solchen Material in Kontakt steht, z.B. in Form einer Innen- oder Außenhülle oder eines Bodenauflagers. In diesem Bereich kann die erzeugte Hitze mit geringem Wärmeverlust und am schnellsten auf den sich im unteren Bereich des Gefäßes sammelnden Verdampfungsstoff übertragen werden, bei dem es sich vorzugsweise um einen flüssigen Verdampfungsstoff handelt.

Wie bereits erwähnt, wirkt sich eine möglichst große, durch die Rotation des Gefäßes erreichte Benetzungsfläche günstig auf die Verdampfung aus. Es ist deshalb vorteilhaft, ein Gefäß zu benutzen, dessen Form von einer Kugel- oder Teilkugelform abweicht, da eine Kugelform zu einer verhältnismäßig kleinen Umfangsfläche führt. Es ist deshalb vorteilhaft, ein hohlzylindrisches Gefäß zu benutzen, dessen Boden eben oder gewölbt sein kann.

Diese Gefäßform führt auch zu einer großen Öffnung des Gefäßes, so daß dessen Befüllung und/oder Entnahme mit dem oder den Stoffen handhabungsfreundlich und schnell erfolgen kann.

Es ist im weiteren vorteilhaft, den Rotationsverdampfer mit einer kontinuierlich funktionierenden Zuführungsvorrichtung für den Behandlungsstoff bzw. ein Probenmaterial und/oder ein Reagenzmittel zu versehen. Auf diese Weise ist es möglich, ein kleines Gefäß zu benutzen und große Stoffmengen zu verarbeiten. Kleine Gefäße sind weniger implosionsgefährdet und werden deshalb bevorzugt benutzt.

Außerdem werden hierdurch Kosten gespart, da sowohl das Gefäß als auch der Rotationsverdampfer insgesamt kleiner ausgestaltet werden können.

Das Gefäß besteht vorzugsweise aus einem korrosions- und hitzebeständigen Material, wie z.B. Glas, Quarz oder Kunststoff, wobei sich hierzu PTFE, PFA, PP, PC und dgl. eignen. Wenn das Gefäß und ein es ggfls. umgebender Mantel aus transparentem Material bestehen, ist eine visuelle Beobachtung der Verdampfung, z.B. eine visuelle Feststellung des Verdampfungsendzeitpunktes, leicht und praktisch möglich, z.B. durch ein Fenster oder eine durchsichtige Tür des Gehäuses der Heizkammer.

Angesichts der Gefahr einer Implosion ist es vorteilhaft, das Gefäß aus einem möglichst nicht splitternden Material zu fertigen.

Durch ein elektrisch steuerbares Ventil, z.B. vorzugsweise in einer Öffnung des Gehäuses der Heizkammer, kann eine gegebenenfalls zusätzliche Gasströmung zugeschaltet werden bzw. der vorhandene Unterdruck abgebaut werden, um z.B. die Heizkammer mit geringer Wartezeit öffnen zu können. Diese Maßnahmen ermöglichen auch eine Innen- und Außenkühlung des Gefäßes und des Halters.

Im Rahmen der Erfindung ist es auch möglich, die jeweils vorhandene Temperatur im oder am Gefäß zu messen und dieses Meßergebnis für eine Leistungsregelung oder Abschaltung der Mikrowellenbestrahlung mittels einer entsprechenden Regelungs- oder Steuereinrichtung zu verwenden.

Nachfolgend werden die Erfindung und weitere durch sie erzielbare Vorteile anhand einer Zeichnung und mehrerer Ausführungsbeispiele erläutert. Es zeigt:
- Fig. 1: einen erfindungsgemäßen Rotationsverdampfer in der Vorderansicht und in schematischer Darstellung;
- Fig. 2 bis 4: abgewandelte Ausgestaltungen des Rotationsverdampfers.

Die Hauptteile des Rotationsverdampfers 1 sind ein sich vorzugsweise im Sinne eines geraden Armes erstreckender Halter 2 zum Halten eines topfförmigen Gefäßes 3 für einen zu verdampfenden Stoff, ein Ständer 4, an dem der Halter 2 um seine Längsachse drehbar gelagert ist, ein Drehantrieb 5 zum Drehen des Halters 2 um seine Längsachse im Sinne einer kontinuierlichen Drehung oder einer Hin- und Her/Drehung, eine Abführungsleitung 6 zum Abführen von Dampf aus dem Gefäß 3 und ein Mikrowellenheizgerät 7 zum Erhitzen des Verdampfungsstoffes im Gefäß 3.

Das Mikrowellenheizgerät 7 weist einen Heizraum 8 auf, der allseitig von einem beim vorliegenden Ausführungsbeispiel quaderförmigen Gehäuse 9 umgeben ist, dem an seiner Frontseite eine Tür (nicht dargestellt) zum wahlweisen Öffnen und Schließen zugeordnet ist. Das Heizgerät 7 umfaßt ferner einen Mikrowellengenerator 11, der nach Einschaltung durch eine Einkopplungsvorrichtung 12 Mikrowellen in den Heizraum 8 einzukoppeln vermag.

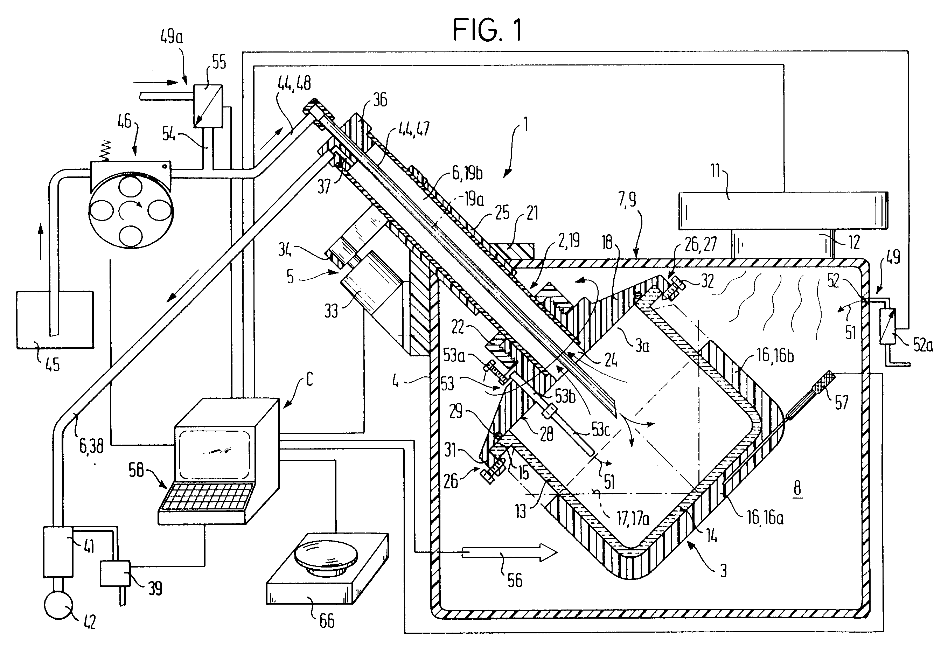

Das Gefäß 3 ist beim Ausführungsbeispiel nach Fig. 1 topfförmig ausgebildet mit einer hohlzylindrischen Umfangswand 13, einem ebenen Boden 14 und einem am oberen Rand der Umfangswand 13 nach außen ragenden Randflansch 15. Das Gefäß 3 besteht beim vorliegenden Ausführungsbeispiel aus Glas, Quarz oder Kunststoff, gegebenenfalls durchsichtig.

Das Gefäß 3 ist wenigstens in seinem unteren Bereich von einer Umhüllung 16 aus mikrowellenabsorbierenden Material umgeben, das sich bei der Bestrahlung mit Mikrowellen erhitzt und seine Wärme über die Wandung des Gefäßes 3 auf den im Gefäß 3 befindlichen Verdampfungsstoff 17 überträgt. Die Umhüllung 16 erstreckt sich mit einem Bodenabschnitt 16a vorzugsweise über den gesamten Bodenbereich und mit einem Mantelabschnitt 16b bis in eine solche Höhe oder noch höher, in der aufgrund der Schräglage des Gefäßes 3 der Flüssigkeitsspiegel 17a steht. Der Mantelabschnitt 16b kann sich jedoch auch bis in die Nähe des Randflansches 15 erstrecken, was andeutungsweise dargestellt ist.

Die Umhüllung 16 steht vorzugsweise ganzflächig mit der Oberfläche des Gefäßes 3 in Kontakt, so daß eine gute Wärmeleitung auf das Gefäß 3 stattfinden kann. Die Befestigung der Umhüllung 16 kann durch geeignete Maßnahmen, z.B. Aufpressen (Klemmbefestigung) oder Kleben erfolgen.

Der Halter 2 besteht aus einem flanschförmigen Deckel 18 für das Gefäß 3 und einer Lagerwelle 19, die sich im hier linken oberen Eckenbereich des Gehäuses 9 durch eine winkelförmige Verstärkung 21 für das Gehäuse 9 und durch dessen Wandung in den Heizraum 8 erstreckt und an seinem inneren bzw. unteren Ende den Deckel 18 in bezüglich ihrer Längs- oder Drehachse 19a radialer Anordnung trägt und damit fest verbunden ist. Die Lagerwelle 19 ist hohl und kann durch ein Rohrstück gebildet sein. Die Befestigung des Deckels 18 kann unlösbar oder lösbar sein, z.B. im Sinne einer lösbaren Klemmvorrichtung mit einer Klemmutter 22, die von oben auf einen außenseitig vorstehenden Klemmring des Deckels 18 aufgeschraubt ist. Koaxial zur hohlen Lagerwelle 19 ist im Deckel ein Loch 24 vorgesehen, durch das beim Erhitzen des Verdampfungsstoffes 17 entstehender Dampf abgesaugt werden kann, was noch beschrieben wird. Zur Lagerung der Lagerwelle 19 ist ein Lagerrohr 25 vorgesehen, das die Wandung des Gehäuses 9 und die darauf aufgesetzte Verstärkung 21 durchsetzt und daran befestigt ist. Die Lagerwelle 19 ist in dem Lagerrohr 25 mit geringem Bewegungsspiel drehbar gelagert. Zur Abdichtung des Lagerspaltes können geeignete Dichtungsringe vorgesehen sein (nicht dargestellt). Die drehbare Lagerwelle 19 ist durch nicht dargestellte Mittel längs ihrer Drehachse 19a unverschiebbar gelagert.

Zur Halterung des Gefäßes 3 sind am Deckel 18 zwei einander radial gegenüberliegende oder drei auf den Umfang verteilt angeordnete Halteklauen 26 vorgesehen, die den Randflansch 15 hintergreifen, und mit denen der Randflansch 15 mit seiner vorzugsweise ebenen Anlagefläche gegen die vorzugsweise ebene Unterfläche des Deckels 18 spannbar ist, so daß die so gebildete lösbare Verschlußeinrichtung 27 eine dichte Verbindung gewährleistet. Vorzugsweise ist zwischen den Randflansch 15 und der Deckelanlagefläche 28 eine Ringdichtung 29 vorgesehen, die in einer Nut vorzugsweise im Deckel 18 teilweise versenkt angeordnet sein kann.

Bei der vorliegenden Ausgestaltung sind die Halteklauen 26 durch einen um 180° umlaufenden oder zwei einander gegenüberliegende axiale Vorsprünge 31 gebildet, in die von außen jeweils eine Spannschraube 32 in einer solchen Höhe eingeschraubt sind, daß die Schraubenenden vorzugsweise mit einer kegelförmigen Spitze den Randflansch 15 hintergreifen und durch die Schraubspannung gegen die Deckelanlagefläche 28 drücken. Bei der Anordnung von zwei einander diametral gegenüberliegenden Schrauben, etwa in einer vertikalen Ebene, kann das Gefäß 3 durch eine horizontale Bewegung von der Frontseite her in den Halter 2 eingesetzt und durch eine entsprechende Rückbewegung wieder aus dem Halter 2 entfernt werden. Dabei erfolgt beim Einsetzen durch Klemmwirkung selbsttätig die Verbindung des Gefäßes 3 mit der Abführungsleitung 6 und beim Entfernen des Gefäßes 3 eine Trennung von der Abführungsleitung 6. D.h., die Verbindung oder Trennung mit der Abführungsleitung 6 erfolgt ohne besondere Verbindungsmaßnahmen, z.B. durch Verschraubungen. Hierdurch ist eine schnelle und handhabungsfreundliche Positionierung oder Entfernung des Gefäßes 3 im Halter bzw. aus diesem gewährleistet.

Der Drehantrieb 5 weist einen Elektromotor 33 auf, der durch eine Antriebsverbindung, hier z.B. einen Treibriemen 34 antriebsmäßig mit der Lagerwelle 19 verbunden ist. Der Drehantrieb 5 ist außerhalb der Heizkammer 8 angeordnet und mittelbar oder unmittelbar am Gehäuse 9 oder an der Verstärkung 21 befestigt, so daß das Gehäuse 9 oder die zugehörigen Anbauteile nicht nur für das Drehlager 25, sondern auch für den Drehantrieb 5 den Ständer 4 bilden. Oberseitig ist die hohle Lagerwelle 19 durch einen Deckel oder einen Stopfen 36 verschlossen, der in der Lagerwelle 19 drehbar gelagert sein kann, so daß die Abführungsleitung 6 damit verbunden sein kann, wobei sie sich durch einen Kanal 37 im Stopfen 36 und den Hohlraum 19b sowie das Loch 24 in das Gefäß 3 erstrecken kann. Bei der vorliegenden Ausgestaltung ist der Stopfen 36 durch ein Rohr oder einen Schlauch 38 mit einer Saugpumpe 39 verbunden, wobei in dieser Verbindung ein Kondensator 41 zum Kondensieren des abgesaugten Dampfes integriert ist, von dem der Dampf in einen Sammelbehälter 42 zu fließen vermag.

Der Verdampfungsstoff 17 kann für einen Verdampfungsvorgang im vom Rotationsverdampfer 1 entfernten Zustand des Gefäßes 3 in dieses eingefüllt werden, wonach das Gefäß in den Halter 2 einzusetzen bzw. einzuhängen ist. Für eine solche Benutzung eignet sich ein Gefäß 3 mit einer großen Öffnung 3a, insbesondere ein hohlzylindrisches Gefäß 3. Dabei bedarf es bei großen Verdampfungsstoffmengen eines großen Gefäßes 3. Wegen des beim Absaugen des Dampfes entstehenden Unterdruckes besteht insbesondere bei großen Gefäßen 3 die Gefahr einer Implosion. Deshalb ist man wegen dieser Gefahr und auch aus Gründen kleiner, kostengünstiger und handhabungsfreundlicher Bauweise bestrebt, ein kleines Gefäß 3 zu haben.

Dies läßt sich auch bei großen Verdampfungsstoffmengen dann verwirklichen, wenn im Rotationsverdampfer 1 bzw. dein Gefäß 3 eine Zuführungseinrichtung für eine Zuführung des Verdampfungsstoffes 17 oder eines Reagenzmittels während des Verdampfungsvorgangs zugeordnet ist, wobei es sich um eine kontinuierliche oder diskontinuierliche Zuführung handeln kann. Beim vorliegenden Ausführungsbeispiel ist eine Zuführungsleitung 44 vorhanden, die sich von einem Vorratsbehälter 45 zu einer Pumpe 46 und dann vorzugsweise koaxial durch die hohle Lagerwelle 19 in das Gefäß 3 erstreckt. Im Bereich der hohlen Lagerwelle 19 wird die Zuführungsleitung 44 durch ein dünnes Rohr 47 gebildet, das den Stopfen 36 dicht durchsetzt und sich koaxial durch die Lagerwelle 19 vorzugsweise bis in den mittleren Bereich des Gefäßes 3 erstreckt. Zwischen dem Vorratsbehälter 45 und dem den Stopfen 36 nach außen überragenden geraden Rohr 47 weist die Zuführungsleitung 44 ein Rohr oder einen Schlauch 48 auf, der mit dem äußeren Ende des Rohrs 47 dicht verbunden ist.

Zur Verbesserung der Dampfabsaugung ist dem Rotationsverdampfer 1 eine Gas-Spüleinrichtung 49 zugeordnet, mit der ein Spül- oder Transportgas 51 in das Gefäß 3 einführbar ist und eine zuverlässige Absaugung des Dampfes aus dem Gefäß 3 dadurch ermöglicht, daß das Transportgas 51 in das Gefäß 3 strömt und den Dampf durch die Abführungsleitung 6 transportiert.

Es ist möglich, das Transportgas aus der Umgebung des Rotationsverdampfers 1 bzw. Gehäuses 9 zu entnehmen, wobei es sich dann um Raumluft handelt. Hierzu wird eine in ihrer Größe vorzugsweise steuerbare Durchgangsöffnung 52 im Gehäuse 9 vorgesehen, durch die Raumluft in die Heizkammer 8 strömen kann, und es ist eine zweite Durchgangsöffnung 53 vorzugsweise ebenfalls steuerbarer Querschnittsgröße im Deckel 18 vorgesehen. Durch diese Durchgangsöffnungen 52, 53 kann beim Absaugen des Gefäßes 3 die Transportluft in das Gefäß 3 gesaugt werden. Vorzugsweise ist der Öffnung 52 ein Ventil 52a verstellbarer Durchflußmenge und der Öffnung 53 eine Einstellschraube 53a zugeordnet. Zwecks Zuführung des Transportgases 51 in den unteren Bereich des Gefäßes 3 kann ein achsparalleler Durchführungskanal 53b durch ein Rohr oder Schlauch 53c bis in den mittleren Bereich des Gefäßes 3 verlängert sein.

Eine andere Möglichkeit zur Zuführung von Transportgas 51 besteht darin, es durch die Zuführungsleitung 44 in das Gefäß 3 einzuführen, wodurch die Durchgangsöffnungen 52, 53 entfallen können. Beim vorliegenden Ausführungsbeispiel ist auch eine solche Gas-Spüleinrichtung 49a alternativ oder zusätzlich vorhanden. Sie umfaßt eine Zuführungsleitung 54, die vorzugsweise in Strömungsrichtung nach der Pumpe 46 in die Zuführungsleitung 44 mündet, hier in den Schlauch 48. In der Zuführungsleitung 54 ist ein verstellbares Durchfluß-Regelventil 55 angeordnet. Die Zuführungsleitung 54 kann von der Umgebung ausgehen oder von einem Vorratsbehälter für Inertgas, wodurch Explosionsschutz in der Heizkammer 3 gewährleistet ist. Bei dieser Ausgestaltung wird das Transportgas 51 mit dem Verdampfungsstoff bzw. unter der Wirkung des im Gefäß 3 vorhandenen Unterdrucks durch die Zuführungsleitung 44 in das Gefäß 3 eingefüht.

Es ist auch möglich, das Ventil 52a an eine Inertgas-Quelle anzuschließen.

Beide vorbeschriebenen Gas-Spüleinrichtungen 49, 49a ermöglichen auch eine Kühlung des Gefäßes 3, sofern kaltes Transportgas 51 zugeführt wird. Dabei ermöglicht die Gas-Spüleinrichtung 49 eine Außen- und Innenkühlung des Gefäßes 3 und Deckels 18, während die Gas-Spüleinrichtung 49a nur eine Innenkühlung herbeiführt.

Dem Gefäß 3 ist außerdem wenigstens ein Temperatursensor 56 zugeordnet, mit dem ein die Temperatur im oder am Gefäß 3 entsprechendes Signal erzeugt werden kann, das zur Abschaltung oder zur Steuerung der Heizleistung des Mikrowellenheizgerätes 7 derart dienen kann, daß eine bestimmte Temperatur im Gefäß 3 geregelt werden kann, nämlich dadurch, daß bei einer Temperatur (Istwert) unterhalb eines bestimmten Sollwertes die Heizleistung erhöht wird und beim Erreichen des Sollwertes so vermindert wird, daß die Solltemperatur im wesentlichen eingehalten wird.

Bei dem Temperatursensor 56 kann es sich um einen Infrarot-Sensor handeln.

In Fig. 1 ist alternativ oder zusätzlich ein zweiter Temperatursensor 57 dargestellt, der sich in den Bodenabschnitt 16a der Umhüllung 16 erstreckt und dort die Ist-Temperatur ermittelt.

Dem Rotationsverdampfer 1 ist eine zentrale Steuereinrichtung C zugeordnet, die vorzugsweise einen Prozessor aufweist, mit der die zugehörigen Funktionsaggregate nicht nur ein- und ausgeschaltet, sondern auch nach besonderen Funktionskriterien eingestellt werden können, z.B. mittels einer Tastatur 58. Hierzu sind die vorbeschriebenen Funktionsteile durch Signal- oder Steuerleitungen mit der Steuereinrichtung C verbunden. Vorzugsweise sind die Förderleistungen der Pumpen 39, 46, die Durchsatzmengen der Ventile 52a, 55, die Drehleistung des Drehantriebs 5 die Leistung des Mikrowellengenerators 11 und die Funktionszeit einstellbar. Es ist auch vorteilhaft, die Steuereinrichtung C so einzurichten, daß der Betrieb nach vorbestimmten oder wählbaren Programmen abläuft.

Zur Vermeidung von Erwärmung im Funktionsbetrieb bestehen alle in der Heizkammer 8 befindlichen Teile des Halters 2 aus mikrowellendurchlässigem Material, z.B. Keramik, Glas oder Kunststoff.

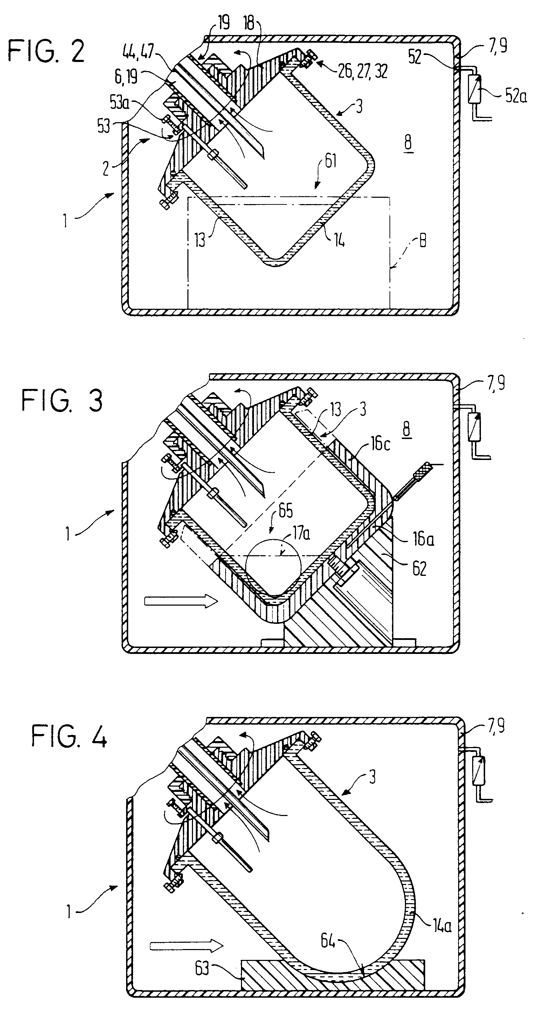

Beim Ausführungsbeispiel nach Fig. 2, bei dem gleiche oder vergleichbare Teile mit gleichen Bezugszeichen versehen sind, besteht das Gefäß 3 wenigstens in seinem unteren Bereich oder insgesamt aus mikrowellenabsorbierenden Material. Hierzu eignet sich z.B. Kunststoff, in den Partikel aus mikrowellenabsorbierendem Material, z.B. Kohlenstoff, eingebettet sind. Ein solcher Kunststoff ist unter der Bezeichnung WEFLON bekannt und auf dem Markt erhältlich. Bei einer solchen Ausgestaltung kann eine Umhüllung aus mikrowellenabsorbierendem Material für das Gefäß 3 entfallen.

In der Fig. 2 ist andeutungsweise außerdem dargestellt, daß zur indirekten Beheizung des Verdampfungsstoffs 17 im Gefäß 3 ein Flüssigkeitsbad 61 vorgesehen sein kann, bestehend aus einem Behälter B, in dem eine mikrowellenabsorbierende Flüssigkeit angeordnet ist, in die das Gefäß in der dargestellten Weise eintaucht, wie es beim Stand der Technik der Fall ist. Bei einer solchen Ausgestaltung kann das Gefäß 3 aus mikrowellendurchlässigem Material bestehen, oder es kann auch aus mikrowellenabsorbierendem Material bestehen, wodurch die Erhitzung unterstützt wird.

Das Ausführungsbeispiel gemäß Fig. 3 unterscheidet sich vom Ausführungsbeispiel nach Fig. 1 lediglich dadurch, daß die Umhüllung nicht fester Teil des Gefäßes 3, sondern ein Teil eines Sockels 62 ist, der vorzugsweise auf dem Boden der Heizkammer 8 stellbar ist, wobei das Gefäß 3 mit geringem Bewegungsspiel in diese Umhüllung 16c paßt und somit darin drehbar ist. Die Umhüllung 16c kann durch eine in ihren Bodenabschnitt 16a einfassende Schraube als separates Bauteil lösbar am entsprechend abgeschrägten Sockel 62 befestigt sein.

Der Sockel 62 kann aus mikrowellendurchlässigem oder aus mikrowellenabsorbierendem Material bestehen. Im ersten Fall bildet er eine Isolierung zwischen dem Gefäß 3 bzw. der Umhüllung 16c und dem Boden der Heizkammer 8. Im zweiten Fall trägt er zur Beheizung des Gefäßes 3 bei.

Beim Ausführungsbeispiel nach Fig. 4 weist das Gefäß 3 einen halbkugelförmig gewölbten Boden 14a auf. Zur Erhitzung des Gefäßes 3 und des darin befindlichen Verdampfungsstoffes 17 dient ein Heizblock 63 aus mikrowellenabsorbierendem Material, der auf dem Boden der Heizkammer 8 stehen kann und oberseitig eine Ausnehmung 64 in der Form und Größe der Wölbung des Gefäßes 3 aufweist, wobei die Anordnung so getroffen ist, daß das Gefäß 3 mit seiner Auswölbung in der Ausnehmung 64 liegt, vorzugsweise vollflächig anliegt. Die Größe der Ausnehmung 64 entspricht vorzugsweise einem Quadranten der Halbkugel des Gefäßes 3. Bei dieser Ausgestaltung wird die Wärme vom sich bei Bestrahlung mit Mikrowellen erwärmenden Heizblock 63 auf das Gefäß 3 und den Verdampfungsstoff 17 übertragen.

Bei den Ausführungsbeispielen gemäß Fig. 3 und 4 können die Umhüllung 16c oder der Heizblock 63 eine Stütz- oder Tragefunktion für das Gefäß 3 ausführen.

Sofern das Gefäß 3 aus durchsichtigem Material besteht, z.B. Glas oder Quarz oder durchsichtigem Kunststoff, ist eine visuelle Beobachtung des Verdampfungsvorgangs und insbesondere dessen Endzeitpunktes dann in vorteilhafter Weise möglich, wenn das Gehäuse ein durchsichtiges Fenster oder eine durchsichtige Tür aufweist, durch das oder durch die die visuelle Beobachtung möglich ist.

Sofern eine Umhüllung 16 oder 16c aus mikrowellenabsorbierendem Material vorhanden ist, das undurchsichtig ist, ist es vorteilhaft, im unteren Bereich der Umhüllung 16, 16c eine durchgehende Ausnehmung vorzusehen, durch die die visuelle Beobachtung möglich ist. Beim Ausführungsbeispiel gemäß Fig. 3, bei dem eine stationäre Umhüllung 16c vorgesehen ist, ist im unteren Eckenbereich des Gefäßes 3 ein einseitig oder sekantial zweiseitig durchgehendes Loch 65 vorgesehen, das beim Vorhandensein einer ausreichenden Beleuchtung die visuelle Beobachtung ermöglicht.

Der erfindungsgemäße Rotationsverdampfer 1 eignet sich nicht nur für reine Verdampfungsvorgänge, sondern auch für Aufbereitung und/oder Trocknung von Probenmaterialien. Er kann z.B. dazu benutzt werden, Restmengen eines Probenmaterials zu bestimmen, das z.B. vor dem Einsatz des Gefäßes 3 in die Heizkammer 8 in das Gefäß 3 eingefüllt worden sein kann und dem ebenfalls vorher oder nach dem Einsatz in die Heizkammer 8 ein Reagenzmittel zugeführt wird, z.B. durch die Zuführungsleitung 44. Nach einer Trocknung kann die Restmenge gegebenenfalls mit dem Gefäß 3 auf einer außerhalb der Heizkammer angeordneten Waage 66 gewogen werden, die durch eine Signalleitung ebenfalls mit der Steuereinrichtung 57 verbunden ist, um eine Gewichtsanzeige auf einem der Steuereinrichtung zugehörigen Bildschirm anzuzeigen, auf dem auch andere Funktionsangaben abgebildet werden können.

## Patentansprüche

1. Rotationsverdampfer (1), bestehend aus
- einem Mikrowellenheizgerät (7) mit einer Heizkammer (8), die durch eine Tür zugänglich ist,
- einem Gefäß (3) mit einer Öffnung (3a) in seinem oberen Bereich,
- einem Halter (2) in der Heizkammer (8) für das Gefäß (3),
- und einem Ständer (4) mit einem Drehlager, in dem der Halter (2) durch einen außerhalb der Heizkammer (8) angeordneten Drehantrieb (5) drehbar gelagert ist,
- wobei der Halter sich (2) von außen nach innen durch die Wand der Heizkammer (8) in diese hineinerstreckt,
- und wobei eine Abführungsleitung (6) mit einer Saugpumpe (39) zum Abführen von Dampf aus dem Gefäß (3) vorgesehen ist,
**dadurch gekennzeichnet**,
daß die Drehachse (19a) des Drehlagers und die Mittelachse des Gefäßes (2) eine von der Vertikalen abweichende Ausrichtung aufweisen und eine Gasspüleinrichtung (49; 49a) für einen das Gefäß (3) durchquerenden Transport Gasstrom (51) vorgesehen ist, wobei die Abführungsleitung (6) Teil der Gasspüleinrichtung (49;49a) ist.

2. Rotationsverdampfer nach Anspruch 1,
*dadurch **gekennzeichnet***, daß
das Gefäß (3) eine achsparallele, vorzugsweise hohlzylindrische Umfangswand (13) aufweist.

3. Rotationsverdampfer nach Anspruch 1 oder 2,
*dadurch **gekennzeichnet***, daß
die Öffnung (3a) des Gefäßes (3) durch die Umfangswand (13) begrenzt ist.

4. Rotationsverdampfer nach einem der vorherigen Ansprüche,
*dadurch **gekennzeichnet***, daß
der Boden (14) des Gefäßes (3) eben oder gewölbt, vorzugsweise halbkugelförmig gewölbt ist.

5. Rotationsverdampfer nach einem der vorherigen Ansprüche,
*dadurch **gekennzeichnet***, daß
das Gefäß aus mikrowellendurchlässigem Material oder wenigstens in seinen, unteren Bereich aus mikrowellenabsorbierendem Material besteht.

6. Rotationsverdampfer nach einem der vorherigen Ansprüche,
*dadurch **gekennzeichnet**,* daß
das Gefäß (3) wenigstens in seinem unteren Bereich eine Innen- oder vorzugweise Außenhülle (16, 16c) aus mikrowellenabsorbierendem Material aufweist.

7. Rotationsverdampfer nach einem der vorherigen Ansprüche,
*dadurch **gekennzeichnet**,* daß
der Halter (2) die Wand der Heizkammer (8) von außen nach innen schräg nach unten durchsetzt, vorzugsweise mit einem mit der Horizontalen einschließenden Winkel von etwa 30 bis 60°, insbesondere etwa 45°.

8. Rotationsverdampfer nach einem der vorherigen Ansprüche,
*dadurch **gekennzeichnet**,* daß
der Halter (2) durch eine Hohlwelle (19) gebildet ist und die Abführungsleitung (6) sich durch die Hohlwelle erstreckt.

9. Rotationsverdampfer nach einem der vorherigen Ansprüche,
*dadurch **gekennzeichnet**,* daß
die Abführungsleitung (6) außerhalb der Heizkammer (8) außer mit der Saugpumpe (46) auch mit einem Kondensator 41 oder Kühler und einem Sammelgefäß (42) für Kondensat verbunden ist.

10. Rotationsverdampfer nach einem der vorherigen Ansprüche,
*dadurch **gekennzeichnet**,* daß
das Gefäß (3) durch eine Verbindungsvorrichtung und Anschlußvorrichtung lösbar mit dem Halter (2) verbunden ist.

11. Rotationsverdampfer nach einem der vorherigen Ansprüche,
*dadurch **gekennzeichnet**,* daß
der Halter (2) an seinem inneren Ende einen Deckel (18), insbesondere einen Schraub- oder Flachdeckel für das Gefäß (3) aufweist.

12. Rotationsverdampfer nach einem der vorherigen Ansprüche,
*dadurch **gekennzeichnet**,* daß
das Gefäß (3) an seinem oberen Rand einen radial nach außen abstehenden Randflansch (15) aufweist.

13. Rotationsverdampfer nach einem der Ansprüche 11 oder 12,
*dadurch **gekennzeichnet**,* daß
der Deckel (18) an seiner dem Gefäß (3) zugewandten Seite einen hinterschnittenen Kragen aufweist, in dessen Hinterschneidung das Gefäß (3) mit seinem Randflansch (15) längs der Längsmittelachse (19a) des Halters (2) oder quer dazu, insbesondere horizontal von der Bedienungsseite her, einführbar und festlegbar ist.

14. Rotationsverdampfer nach Anspruch 13,
*dadurch **gekennzeichnet**,* daß
der Kragen durch zwei, vorzugsweise in einer die Längsmittelachse des Halters (2) enthaltende Vertikalebene angeordnete, oder mehrere, auf dem Umfang verteilt angeordnete Halteklauen (26) zum Hintergreifen des Randflansches (15) aufweist.

15. Rotationsverdampfer nach Anspruch 14,
*dadurch **gekennzeichnet**,* daß
die Halteklauen (26) in Richtung auf den Deckel (13) elastisch vorgespannt sind oder radiale Spannschrauben (32) für den Hintergriff des Randflansches (15) aufweisen, die vorzugsweise kegelförmig angespitzt sind.

16. Rotationsverdampfer nach einem der vorherigen Ansprüche,
*dadurch **gekennzeichnet**,* daß
das Gefäß (3) in seiner am Halter (2) gehaltenen Position mit seinem unteren Bereich in eine entsprechend geformte oberseitige Ausnehmung (64) eines Körpers aus mikrowellenabsorbierendem Material aufgenommen ist.

17. Rotationsverdampfer nach Anspruch 16,
*dadurch **gekennzeichnet**,* daß
der Körper (16c) die Form eines Topfes aufweist, dessen Umfangswand sich über einen Teil der Höhe des Gefäßes (3), insbesondere bis zum sich einstellenden Niveau (17a) des Verdampfungsstoffes (17) oder sich bis nahe an das obere Ende des Gefäßes (3) erstreckt und in dem das Gefäß (3) mit geringem Bewegungsspiel drehbar aufgenommen ist.

18. Rotationsverdampfer nach einem der vorherigen Ansprüche,
*dadurch **gekennzeichnet**,* daß
eine Zuführungseinrichtung mit einer Zuführungsleitung (44) für den Verdampfungsstoff (17) vorgesehen ist zum Zuführen des Verdampfungsstoffes (17) während des Verdampfungsbetriebs, und wobei die Zuführungsleitung (44) sich vorzugsweise durch den hohlen Halter (2) erstreckt und den Deckel (18) durchsetzt.

19. Rotationsverdampfer nach Anspruch 18,
*dadurch **gekennzeichnet**,* daß
zumindest ein Teil der Zuführungsleitung (44) für die Zuführungseinrichtung und die Gasspüleinrichtung (49, 49a) gemeinsam ist.

20. Rotationsverdampfer nach einem oder mehreren der vorherigen Ansprüche,
*dadurch **gekennzeichnet**,* daß
das Gefäß (3) und gegebenenfalls auch die Umhüllung (16, 16c) aus durchsichtigem Material besteht bzw. bestehen.

21. Rotationsverdampfer nach Anspruch 20,
*dadurch **gekennzeichnet**,* daß
das Gehäuse (9), insbesondere die Tür durchsichtig ist oder ein durchsichtiges Schauloch aufweist und die Umhüllung (16c) durchsichtig ist oder ein Loch im unteren Eckenbereich des Gefäßes (3) aufweist.

## Claims

1. Rotary evaporator (1), comprising
- a microwave heating device (7) with a heating chamber (8), which is accessible through a door,
- a receptacle (3) with an opening 3a) in its upper region,
- a holder (2) in the heating chamber (8) for the receptacle,
- and a stand (4) with a rotary bearing, in which the holder (2) is mounted so as to be rotatable by a rotary drive (5) arranged outside the heating chamber (8),
- the holder (2) extending from the outside into the heating chamber (8) through the wall of the heating chamber (8),
- and an outlet line (6) with a suction pump (39) for drawing off vapour from the receptacle (3) being provided, characterised in that the rotary axis (19a) of the rotary bearing and the centre axis of the receptacle (2) have an alignment deviating from the vertical and a gas rinsing device (49; 49a) is provided for a transport gas flow (51) crossing the receptacle (3), the outlet line (6) being part of the gas rinsing device (49; 49a).

2. Rotary evaporator according to claim 1, characterized in that the receptacle (3) comprises an axially parallel, preferably hollow cylindrical circumferential wall (13).

3. Rotary evaporator according to claim 1 or 2, characterised in that the opening (3a) of the receptacle (3) is defined by the circumferential wall (13).

4. Rotary evaporator according to one of the preceding claims, characterised in that the base (14) of the receptacle (3) is flat or curved, preferably curved in the shape of a hemisphere.

5. Rotary evaporator according to one of the preceding claims, characterized in that the receptacle is made of microwave-permeable material or at least in its lower region is made of microwave-absorbent material.

6. Rotary evaporator according to one of the preceding claims, characterised in that, at least in its lower region, the receptacle (3) comprises an inner or preferably outer casing (16, 16c) made of microwave-absorbent material.

7. Rotary evaporator according to one of the preceding claims, characterised in that the holder (2) penetrates the wall of the heating chamber (8) from the outside towards the inside in a downwardly inclined direction, preferably forming an angle of approximately 30 to 60°, more particularly approximately 45°, with the horizontal.

8. Rotary evaporator according to one of the preceding claims, characterized in that the holder (2) is formed by a hollow shaft (19) and the outlet line (6) extends through the hollow shaft.

9. Rotary evaporator according to one of the preceding claims, characterized in that, in addition to being connected to the suction pump (46) outside the heating chamber (8), the outlet line (6) is also connected to a condenser (41) or cooler and a collecting receptacle (42) for condensate.

10. Rotary evaporator according to one of the preceding claims, characterised in that the receptacle (3) is releasably connected to the holder (2) by means of a connecting device and attachment device.

11. Rotary evaporator according to one of the preceding claims, characterised in that, at its inner end, the holder (2) comprises a lid (18), more particularly a screw or flat lid for the receptacle (3).

12. Rotary evaporator according to one of the preceding claims, characterised in that, on its upper edge, the receptacle (3) comprises a radially outwardly projecting peripheral flange (15).

13. Rotary evaporator according to one of claims 11 or 12, characterized in that, on its side facing the receptacle (3), the lid (18) comprises an undercut collar, into whose undercut the receptacle (3) with its peripheral flange (15) can be introduced and secured along the longitudinal centre axis (19a) of the holder (2) or transversely thereto, more particularly horizontally from the operating side.

14. Rotary evaporator according to claim 13, characterized in that the collar comprises two retaining claws (26), preferably arranged in a vertical plane containing the longitudinal centre axis of the holder (2), or a plurality of retaining claws (26) distributed over the circumference for engaging behind the peripheral flange (15).

15. Rotary evaporator according to claim 14, characterized in that the retaining claws (26) are elastically prestressed in the direction of the lid (18) or comprise radial clamping screws (32) for engaging behind the peripheral flange (15) which are preferably conically tapered.

16. Rotary evaporator according to one of the preceding claims, characterized in that, in its position held in the holder (2), the receptacle (3) is accommodated with its lower region in a correspondingly shaped upper recess (64) of an element made of microwave-absorbent material.

17. Rotary evaporator according to claim 16, characterized in that the element (16c) has the shape of a cup, whose circumferential wall extends over part of the height of the receptacle (3), more particularly as far as the level (17a) reached by the evaporation substance (17) or into the vicinity of the upper end of the receptacle (3), and in which the receptacle (3) is rotatably accommodated with a small degree of movement clearance.

18. Rotary evaporator according to one of the preceding claims, characterised in that a supply device with a supply line (44) for the evaporation substance (17) is provided for the supply of the evaporation substance (17) during evaporation operation, the supply line (44) preferably extending through the hollow holder (2) and penetrating the lid (18).

19. Rotary evaporator according to claim 18, characterised in that at least part of the supply line (44) is common to the supply device and the gas rinsing device (49; 49a).

20. Rotary evaporator according to one or more of the preceding claims, characterised in that the receptacle (3) and optionally also the casing (16, 16c) is/are made of transparent material.

21. Rotary evaporator according to claim 20, characterized in that the housing (9), more particularly the door is transparent or comprises a transparent inspection aperture and the casing (16c) is transparent or comprises an aperture in the lower corner region of the receptacle (3).

## Revendications

1. Evaporateur rotatif (1) comprenant
- un appareil de chauffage à micro-ondes (7) avec une chambre de chauffage (8) à laquelle on accède par une porte,
- un récipient (3) avec une ouverture (3a) dans sa partie supérieure.
- un support (2) pour le récipient (3) dans la chambre de chauffage (8)
- un châssis-support (4) avec un palier tournant dans lequel le support (2) est monté tournant et est entraîné par un mécanisme d'entraînement en rotation (5) disposé à l'extérieur de la chambre de chauffage (8),
- le support (2) s'étendant de l'extérieur vers l'intérieur à travers la paroi de la chambre de chauffage (8), dans celle-ci,
- et une conduite d'évacuation (6) avec une pompe aspirante (39) pour évacuer la vapeur du récipient (3) étant prévue,
caractérisé par le fait que l'axe de rotation (19a) du palier tournant et l'axe médian du récipient (2) présentent une orientation différente de la verticale et qu'un dispositif de balayage au gaz (49; 49a) pour un flux de gaz de transport (51) traversant le récipient (3) est prévu, la conduite d'évacuation (6) faisant partie du dispositif de balayage au gaz (49,49a).

2. Evaporateur rotatif selon la revendication 1, caractérisé par le fait que le récipient (3) présente une paroi périphérique (13) parallèle à l'axe, de préférence cylindrique creuse.

3. Evaporateur rotatif selon la revendication 1 ou 2, caractérisé par le fait que l'ouverture (3a) du récipient (3) est délimitée par la paroi périphérique (13).

4. Evaporateur rotatif selon une des revendications précédentes, caractérisé par le fait que le fond (14) du récipient (3) est plan ou bombé, de préférence est bombé hémisphérique.

5. Evaporateur rotatif selon une des revendications précédentes, caractérisé par le fait que le récipient (3) est réalisé en un matériau perméable aux micro-ondes ou qu'au moins sa partie inférieure est réalisée en un matériau absorbant les micro-ondes.

6. Evaporateur rotatif selon une des revendications précédentes, caractérisé par le fait que le récipient (3), au moins dans sa partie inférieure, est pourvu d'une enveloppe intérieure ou de préférence extérieure (16,16c) en un matériau absorbant les micro-ondes.

7. Evaporateur rotatif selon une des revendications précédentes, caractérisé par le fait que le support (2) traverse la paroi de la chambre de chauffage (8) de l'extérieur vers l"intérieur en étant incliné vers le bas, de préférence en formant un angle compris entre environ 30 et 60°, notamment d'environ 45° avec l'horizontale.

8. Evaporateur rotatif selon une des revendications précédentes, caractérisé par le fait que le support (2) est formé d'un axe creux (19) et que la conduite d'évacuation (6) s'étend à travers l'axe creux.

9. Evaporateur rotatif selon une des revendications précédentes, caractérisé par le fait que la conduite d'évacuation (6), à l'extérieur de la chambre de chauffage (8), en plus de sa liaison avec la pompe d'aspiration (46), est reliée à un condenseur (41) ou un refroidisseur et à un récipient de collecte (42) pour le condensat.

10. Evaporateur rotatif selon une des revendications précédentes, caractérisé par le fait que le récipient (3) est lié de manière séparable au support (2) par un dispositif de liaison et un dispositif de connexion.

11. Evaporateur rotatif selon une des revendications précédentes, caractérisé par le fait que le support (2), à son extrémité intérieure, comporte un couvercle (18), notamment un couvercle à vis ou un couvercle plat pour le récipient (3).

12. Evaporateur rotatif selon une des revendications précédentes, caractérisé par le fait que le récipient (3) présente au niveau de son bord supérieur un rebord (15) qui fait saillie radialement vers l'extérieur.

13. Evaporateur rotatif selon une des revendications 11 ou 12, caractérisé par le fait que le couvercle (18), sur sa face tournée vers le récipient (3), présente un collet en contre-dépouille, dans la contre-dépouille duquel le récipient (3) peut être introduit et fixé avec son rebord (15), suivant l'axe médian longitudinal (19a) du support (2) ou transversalement à celui-ci, notamment horizontalement, depuis le côté utilisateur.

14. Evaporateur rotatif selon la revendication 13, caractérisé par le fait que le rebord comporte deux griffes de fixation (26), de préférence disposées dans un plan vertical passant par l'axe médian longitudinal du support (2), ou plusieurs griffes de fixation réparties sur le pourtour qui s'engagent derrière le rebord périphérique (15).

15. Evaporateur rotatif selon la revendication 14, caractérisé par le fait que les griffes de fixation (26) sont précontraintes élastiquement en direction du couvercle (13) ou présentent des vis de serrage (32) s'engageant derrière le rebord périphérique (15), lesquelles vis sont pourvues de préférence d'un bout conique.

16. Evaporateur rotatif selon une des revendications précédentes, caractérisé par le fait que le récipient (3), dans sa position tenue dans le support (2) est reçu au niveau de sa partie inférieure dans un évidement (64) conformé en conséquencedans la face supérieure d'un corps en un matériau absorbant les micro-ondes.

17. Evaporateur rotatif selon la revendication 16, caractérisé par le fait que le corps (16c) à la forme d'un bol dont la paroi périphérique s'étend sur une partie de la hauteur du récipient (3), notamment jusqu'au niveau (17a) de la substance à évaporer (17) ou jusque dans le voisinage de l'extrémité supérieure du récipient (3), et lequel le récipient (3) est reçu avec un faible jeu permettant son mouvement.

18. Evaporateur rotatif selon une des revendications précédentes, caractérisé par le fait qu'il est prévu un dispositif d'alimentation avec une conduite d'alimentation (44) pour la substance à évaporer (17) aux fins d'introduire la substance à évaporer (17) pendant le fonctionnement, la conduite d'alimentation (44) s'étendant de préférence à travers le support (2) creux et traversant le couvercle (18)

19. Evaporateur rotatif selon la revendication 18, caractérisé par le fait qu'au moins une partie de la conduite d'alimentation (44) est commune au dispositif d'alimentation et au dispositif de balayage au gaz (49, 49a).

20. Evaporateur rotatif selon une ou plusieurs des revendications précédentes, caractérisé par le fait que le récipient (3) et éventuellement l'enveloppe (16, 16c) est ou sont réalisé(s) en un matériau transparent.

21. Evaporateur rotatif selon la revendication 20, caractérisé par le fait que le corps (9), notamment la porte est transparent ou comporte un hublot transparent et que l'enveloppe (16c) est transparente ou comporte un trou dans la région de l'angle inférieur du récipient (3).
